(19) Europäisches Patentamt
European Patent Office
Office européen des brevets

(11) Publication number: 0 090 446
A2

# (12) EUROPEAN PATENT APPLICATION

(21) Application number: 83200354.5

(22) Date of filing: 15.03.83

(51) Int. Cl.³: A 01 N 25/10

(30) Priority: 25.03.82 GB 8208850

(43) Date of publication of application: 05.10.83 Bulletin 83/40

(84) Designated Contracting States: AT BE CH DE FR GB IT LI LU NL SE

(71) Applicant: SHELL INTERNATIONALE RESEARCH MAATSCHAPPIJ B.V., Carel van Bylandtlaan 30, NL-2596 HR Den Haag (NL)

(72) Inventor: Bouman, Johannes Theodorus, Badhuisweg 3, NL-1031 CM Amsterdam (NL)
Inventor: Ramsbotham, John, Badhuisweg 3, NL-1031 CM Amsterdam (NL)

(74) Representative: Hunter, Keith Roger Ian et al, 4 York Road, London SE1 7NA (GB)

## (54) Slow release pesticidal composition and control device, its preparation and its use.

(57) Slow release pesticidal composition comprising an intimate admixture of (a) a solid polymeric macromolecular substance, (b) a contact-pesticide having arthropodicidal action, and (c) a component acting as a carrier for the contact-pesticide, which component is incompatible with the solid polymeric marcomolecular substance.

EP 0 090 446 A2

# SLOW RELEASE PESTICIDAL COMPOSITION AND CONTROL DEVICE, ITS PREPARATION AND ITS USE

This application relates to a slow release pesticidal composition, a slow release pesticidal control device made thereof, a method for the preparation of such a device and a method of using it in controlling ectoparasites on or near an animal. More in particular it relates to a slow release pesticidal composition comprising an intimate admixture of (a) a solid polymeric macromolecular substance and (b) a contact-pesticide having arthropodicidal action.

The pesticide should thus be active against arthropods, and more in particular against insects (hexapoda) and/or arachnids (arachnoidea). Pesticides having only fungicidal, herbicidal etc. action are not considered in this application. The expression "contact-pesticide" is used in the normal sense, viz. to indicate that the main toxicological mode of action is by contact, and not by e.g. respiration or oral intake.

Although vaporous pesticides in polymer matrices have been known and manufactured for many years (cf. US patent specification 3318769, relating to a composition of DDVP and PVC), contact pesticides have seldomly been proposed for slow release compositions. This may probably be due to the fact that most contact-pesticides do not emit from such compositions when they have been incorporated therein. Since a contact-pesticide is relatively involatile, i.e. does hardly evaporate, it should be moved out of the composition in some other way.

Thus US patent specification 3944662 describes a slow release composition for a pet collar,wherein crystals bloom out onto the surface and are retained thereon in a certain polymorphic form, until they are removed from the surface by

wiping them off. Unfortunately, such a mechanism is limited to a few selected combinations of polymer matrices and solid, crystallizable pesticides.

An alternative way to emit contact-pesticides from the composition would be to employ excessively high initial concentrations, hoping that some of the pesticide is released eventually, e.g. because of the bending and stretching during its use in a pet collar. This has the obvious disadvantage of wasting a considerable amount of expensive pesticide.

It is therefore desirable to provide a composition which can emit any contact-pesticide at a reasonably fast rate, and it is furthermore desirable that as much as possible of the contact-pesticide present in the composition is emitted eventually.

This is accomplished according to the invention by "sweating out" the contact-pesticide. Since contact-pesticides are to a large extent compatible with solid polymeric macromolecular substances, use should be made of a carrier which is incompatible with the polymer and will be "sweated out" therefore.

Accordingly, the invention relates to a slow release pesticidal composition comprising an intimate admixture of (a) a solid polymeric macromolecular substance, (b) a contact-pesticide having arthropodicidal action and (c) a component acting as a carrier for the contact-pesticide, which component is incompatible with the solid polymeric macromolecular substance.

In this application "compatibility" will be taken to mean the ability of two or more substances to mix with each other to form a homogeneous composition with useful properties. This is the sense in which the term is used in the production of plastic materials, and contrasts with its use in applications of plastics, in which compatibility commonly means that the polymer does not interact with its

environment, e.g. does not swell, dissolve, etc. These definitions are taken from the Encyclopedia of Polymer Science and Technology, Volume 10, John Wiley (New York 1969), p. 240. Unfortunately it is not possible to express the (in)compatibility of two substances in a simple, single parameter. It is known that e.g. molecular weight, molecular size, polarity, polarizibility, and hydrogen-bonding all interactively relate to the solubility or rather the compatibility. Moreover, a polymer is not necessarily either entirely compatible with or completely incompatible with a liquid, indeed, it is not at all uncommon for a plasticizer to have considerable but incomplete compatibility with a polymer. Plasticizers that are highly compatible with a polymer do not exude to form droplets or a liquid surface film, or bloom as a crystalline surface crust. These are commonly called primary plasticizers. Those which on standing do exude or bloom are usually called secondary plasticizers and are commonly used in combination with primary plasticizers. The distinction between primary and secondary plasticizers is vague, depending in part on the polymer used, the concentration desired, and the environment and conditions of end use. The apparent compatibility of a plasticizer with a given resin may also be influenced by factors such as pressure, temperature, humidity and sunlight. However, it will be obvious from the above to those skilled in the art, what is meant by "compatible" and "incompatible" in the context of this application.

The solid polymeric macromolecular substance preferably is an organic synthetic polymer, but natural or biopolymers, inorganic polymers and semi-synthetic polymers are not excluded.

The solid polymeric macromolecular substance present in the composition according to the invention preferably has a molecular weight of above 1000. The polymeric macromolecular substance may be thermosetting or thermoplastic, although the latter is more readily employed in the manufacture of a control device according to the invention. Examples of suitable macromolecular substances are polyolefins (for example polyethylene, polypropylene and copolymers of ethylene and propylene); polyacrylates (for example polymers and copolymers of methyl acrylate, ethyl acrylate, methyl methacrylate and ethyl methacrylate); polymers of vinyl compounds (for example polystyrene and polymerized divinylbenzene); polyvinyl halides (for example polyvinyl chloride); polyvinyl acetals (for example polyvinyl butyral); polyvinylidene compounds (for example polyvinylidene chloride); synthetic and natural elastomers (for example rubber obtained from hevea brasiliensis, cis-1,4-polyisoprene, polybutadiene and SBR rubber); urea-formaldehyde and melamine-formaldehyde resins; epoxy resins (for example polymers of polyglycidyl ethers of polyhydric phenols); cellulose plastics (for example cellulose acetate, cellulose butyrate and cellulose nitrate); and polyurethanes. Choice of the macromolecular substance will depend both on the particular pesticide and carrier with which it is to be formulated, and the conditions under which the final formulation will be employed. The macromolecular substance, to be most effective, must be insoluble in water and present a hydrophobic surface, thus resisting the absorption of moisture on its surface.

Preferably, the macromolecular substance is a polymer or a copolymer of a vinyl compound, for example polyvinyl halides (for instance polyvinyl chloride and polyvinyl fluoride); polyacrylate and polymethacrylate esters (for instance polymethyl acrylate and polymethyl methacrylate); and polymers of vinyl benzenes (for instance, polystyrene and polymerized vinyl toluene). Because it combines the most desirable physical properties with a low cost the most preferred macromolecular substance is a polymer or a copolymer of vinyl chloride.

It is generally preferred - in order to enable satisfactory control devices such as animal collars or ear tags to be formed from the composition - that in addition (d) a plasticizer which is compatible with the solid polymeric macromolecular substance is admixed. Examples of such (primary) plasticizers are phthalates (for example dioctyl phthalate, diphenyl phthalate, dicyclohexyl phthalate, dimethyl phthalate and dihexyl phthalate); sebacates (for example dipentyl sebacate, n-butyl benzyl sebacate and dibenzyl sebacate); and adipates (for example dioctyl adipate, dicapryl adipate, di-isobutyl adipate and dinonyl adipate). Other compatible plasticizers are, for example, hydrogenated polyphenols; alkylated aromatic hydrocarbons; and polyester plasticizers, for example polyesters of polyols, such as hexanediol, and polycarboxylic acids, such as sebacic or adipic acid, having molecular weights of about 2000.

Other materials (for example dyes, pigments, attractants, other biocides, lubricants, fillers, anti-oxidants and ultraviolet stabilizers) may be included in the material. For example, it has been found that the stability of both the macromolecular substance and the pesticide is extended if a stabilizing amount, preferably 0.1% w to 10% w, of a phenol is included in the material; for example, phenol, p-cresol, m-cresol, hydroquinone, resorcinol and pyrogallol are effective as stabilizers. The phenols are preferably unsubstituted and alkylsubstituted mono- and di-hydroxybenzenes wherein the alkyl groups have not more than eight carbon atoms. Particularly preferred phenols are phenolic anti-oxidants, for example mononuclear phenols having a phenolic hydroxyl group which is hindered by one or more ortho-alkyl groups (for example 2,6-dialkyl phenols, for instance 2,6-di-tert.butyl-4-methyl phenol; 2,4,6-tri-tert. butyl phenol; 2,6-di-tert.butyl phenol; 2-methyl-6-tert.

butyl phenol; 2,4-di-methyl-6-tert.butyl phenol and 2,6-di-isopropyl-4-methyl phenol). Also preferred are, for example, bisphenolic and biphenolic stabilizers (for example bis-(3,5-di-tert.butyl-4-hydroxyphenyl)methane; bis-(2-hydroxy-3-tert.butyl-5-methylphenyl)methane and 3,3',5,5'-tetra-tert.butyl-4,4'-dihydroxy biphenyl);naphthols (for example beta-naphthol) and benzyl alcohols (for instance 3,5-di-tert.butyl-4-hydroxybenzyl alcohol; 3,5-di-isopropyl-4-hydroxy-benzyl alcohol and 3-methyl-5-tert.butyl-4-hydroxybenzyl alcohol).

As stated the contact-pesticide should be active against arthropods. Preferably the contact-pesticide should not be toxic against warm-blooded animals, meaning that the oral $LD_{50}$ as measured in rats preferably should be greater than 10 mg/kg body weight, in particular greater than 500 mg/kg body weight. The invention is particularly advantageous for non-vaporous, non-crystallizing contact pesticides.

It is preferred that within the arthropodicidal action spectrum, the contact-pesticide has insecticidal and/or acaricidal action. The class of the insects (hexapoda) includes a.o. the following noxious orders: lice (anoplura), hair- and featherlice (mallophaga), fleas (aphaniptera), mosquitoes (nematocera) and flies (brachycera). Although sometimes in the literature the term insecticides includes acaricides, this is not correct, since the mites (acari), including the family of the ticks (ixodideae), belong to the class of the arachnids (arachnoidea). Obviously, these two classes include many ectoparasites, in particular on cattle or other livestock and domestic animals, e.g. cats and dogs.

Many contact-pesticides are known and are suitable for inclusion in the present composition. The insecticides and acaricides generally can be divided into the following groups: natural insecticides and semi- and wholly synthetic pyrethroids; chlorinated hydrocarbons (and derivatives);

phosphoric and thiophosphoric esters; carbamates; foramidine derivatives; microbial insecticides; insect growth regulators; insect pheromones; and insect chemosterilants. This division has been taken from: Ullmanns Encyklopädie der technischen Chemie, 4th edition, Volume 13, Verlag Chemie (Weinheim 1977), pages 209-273.

From this reference or from other literature sources a suitable contact pesticide can be sought. Examples of a few suitable compounds are: pyrethrum, alletrin and other synthetic pyrethroids, nicotine, sabadilla, quassia, DDT (2,2-bis-(p-chlorophenyl)-1,1,1,-trichloroethane), lindane ($\gamma$-$C_6H_6Cl_6$), toxaphene (chlorinated camphene, $C_{10}H_{10}Cl_8$), endosulphane ($C_9H_6Cl_6O_3S$), alodan ($C_9H_6Cl_8$), malathion (O,O-dimethyl-S-[1,2-bis(ethoxycarbonyl)ethyl] dithiophosphate), dimethoate (O,O-dimethyl-S-[(N-methylcarbamoyl)methyl] dithiophosphate), chlorfenvinphos (O,O-diethyl-O-[2-chloro-1-(2,4-dichlorophenyl)vinyl] phosphate) and its corresponding thionophosphate, temephos (4,4'-bis - (dimethoxyphosphinothioyloxy) diphenylsulphide), trichlorphon or chlorofos (O,O-dimethyl-2,2,2-trichloro-1-hydroxyethanephosphonate), dioxathion (2,3-bis(diethoxy-phosphinothioylthio) 1,4-dioxane, phoxim ((diethoxyphosphinothioyloxyimino) phenylacetonitril), carbaryl (1-naphthylmethylcarbamate), and propoxur (2-isopropoxyphenylmethylcarbamate).

Because of their excellent insecticidal action and their low mammalian toxicity, the natural pyrethrins and the semi- and wholly synthetic pyrethroids are very suitable. Preferably the contact-pesticide is a pyrethroid, therefore.

It is generally agreed upon in the art which compounds are to be called pyrethroids. Most of them contain the functional grouping

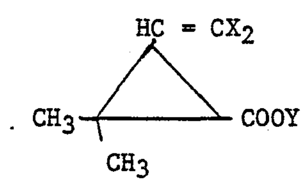

wherein X = $CH_3$,F,Cl,Br,I and Y = a mono- or bicyclic aromatic group, optionally containing oxygen atoms. In particular the group Y is 3-phenoxybenzyl or α-cyano-3-phenoxybenzyl. A most important compound not containing a cyclopropane group, fenvalerate α-cyano-3-phenoxybenzyl-2(4-chlorophenyl)-2-isopropyl acetate), is also considered to be a pyrethroid, however.

It will be appreciated that the pesticidally-active pyrethroids may have a number of asymmetric carbon atoms present in their structures and thus give rise to a corresponding number of isomers. Accordingly, the invention also includes a slow release pesticidal composition comprising a solid polymeric macromolecular substance and a pyrethroid contact-pesticide in the form of a single isomer or of a mixture of 2 or more such isomers.

A suitable example of a mixture of 2 isomers is the mixture comprising 1R cis S-cypermethrin and 1S cis R-cypermethrin as described in U.K. patent application 2064528.

The third component, i.e. the component acting as a carrier for the contact-pesticide, which component is incompatible with the solid polymeric macromolecular substance, preferably is a liquid solvent for the contact-pesticide. Of importance is the affinity of the contact-pesticide towards the third component, which affinity should be greater than the affinity towards the polymeric substance, obviously, if the contact-pesticide is to be "sweated out" together with its carrier. As long as the incompatible component is present in the polymer matrix of the composition, it may act as a (secondary) plasticizer therefor.

Suitable incompatible components acting as a carrier are for instance chlorinated hydrocarbons, epoxidized soya bean oil, light oils, in particular vegetable oils such as corn oil or sesame oil. Less or not suitable is for instance glycerol, since it does not sweat out of the polymer substance, at least not in concentrations up to 10% by weight in polyvinyl chloride.

It is possible to include in the composition a component acting synergistically with the contact-pesticide, i.e. a component which may or may not have some pesticidal activity of its own, but which augments the pesticidal action of the contact-pesticide. Synergism is particularly known with the pyrethroid insecticides/acaricides. In a preferred embodiment the component acting as a carrier for the contact-pesticide, acts as a synergist with the pesticide, the contact-pesticide preferably being a pyrethroid. When the synergistic component is exuded now from the polymeric substance, it is already mixed with the contact-pesticide and may start its action immediately.

Excellent results have been obtained when the component acting as a carrier for and as a synergist with the pyrethroid is a vegetable oil containing 1,3-benzodioxole (1,2-methylenedioxybenzene) or a derivative thereof. Suitable examples of such derivatives are

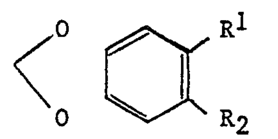

piperonylbutoxide (represented by the formula, wherein $R^1 = nC_3H_7$ and $R^2 = CH_2OCH_2CH_2OCH_2CH_2O\text{-}nC_4H_9$), sesamex ($R^1 = H$ and $R^2 = O\text{-}CH(CH_3)\text{-}OCH_2CH_2OCH_2CH_2OC_2H_5$, and sulfoxide ($R^1 = H$ and $R^2 = CH_2CH(CH_3)\text{-}SO\text{-}nC_8H_{17}$).
It is especially preferred if the vegetable oil containing 1,3-benzodioxole or a derivative thereof is sesame oil, for sesame oil shows synergistic activity, and is incompatible with solid polymeric substances, thus giving excellent results in practice.

The concentrations of the various components may vary but the composition preferably comprises an intimate admixture of (a) 40-98% by weight of the solid polymeric macromolecular substance, (b) 1-15% by weight, particularly 4-12% of the contact-pesticide having arthropodicidal action, (c) 1-20% by weight, particularly 2-7%, of the component acting as a carrier for the contact-pesticide, which component is incompatible with the solid polymeric macromolecular substance, and (d) 0-40% by weight, particularly 10-30%, of the plasticizer which is compatible with the solid polymeric macromolecular substance.

It has been experienced that when the concentrations of the secondary (c) and the primary (d) plasticizer become high, the composition becomes sticky, which is - although not hampering the exudation - undesirable from a handling point of view. Preferably the sum of the weight percentages (c) and (d) does not exceed 40%.

The composition of the invention can advantageously be employed in the manufacture of slow release pesticidal control devices. The application therefore also relates to a slow release pesticidal control device made entirely or partially of the composition according to the invention and to a method for the preparation of a slow release pesticidal control device, which consists of that the intimately admixed and heated composition of the invention is cast, extruded or injection moulded into a desired shape.

The processes of casting, extrusion and injection moulding are particularly suited for thermoplastic materials such as polyvinyl chloride. Alternatively the contact-insecticide, optionally already dispersed in the component acting as a carrier, can be dispersed into the ingredients of a thermosetting composition, which composition subsequently can be shaped and cured. Other methods of preparation will be obvious to those skilled in the art from these examples.

The slow release pesticidal control devices may be used in window contact strips, crawling insect killer strips, both for soil and sub-soil applications, and similar devices. Especially suitable they are for use on warm-blooded animals, such as cattle and other livestock, pets like cats and dogs, etc. The application therefore also relates to a method of controlling ectoparasites on or near an animal, consisting in that a slow release pesticidal control device according to the invention is attached to the animal.

For example, collars are placed around the neck of the animal to be treated or a medallion may be hung from a collar on the animal. The pesticide released from these products functions well to protect the animal from ectoparasitic pests such as fleas and ticks over an extended period of time. Another technique to control ectoparasitic pests is to attach a tag made of the composition of the invention in the ear of the animal, whence the contact-pesticide is distributed to other parts of its body.

If desired, one may even improve the ectoparasiticidal action by smearing the slow release pesticidal control device with a light oil. Especially preferred are vegetable oils containing 1,3-benzodioxole, because of their synergistic action.

The present invention is further illustrated in the following examples.

EXAMPLES 1-4

Control devices in accordance with the invention and comparative devices were prepared using a standard formulation of (% by weight):

| | |
|---|---|
| 8 | contact-pesticide |
| 3 | stabilizer |
| 59 | polyvinyl chloride |
| 30 | plasticizer (combination) |

The ingredients were dry blended, plasticized on a roller

mill and finally pressed into small test strips. These strips were tested both as such and also when lightly oiled.

The contact-pesticide used was cypermethrin, a liquid racemate of 8 stereoisomers of α-cyano-3-phenoxybenzyl 2,2-dimethyl-3-(2,2-dichlorovinyl)cyclopropane carboxylate. As stabilizer a commercial product called Mark 1603 was used, comprising Ba-phenolate, Zn-octoate, didecylphenyl phosphite and epoxidised linseed oil. The polyvinyl chloride was identified as SCON 5350, having a molecular weight of about 77000. As plasticizer or plasticizer combination were used: dioctyl adipate (DOA), as standard primary plasticizer, compatible with the polyvinyl chloride and the following non-compatible secondary plasticizers: a commercially obtained mixture of chlorinated hydrocarbons (Cereclor S42), sesame oil and corn oil.

Example 1

The strips were evaluated for pyrethroid emission, using a standardized in vitro test. Accordingly, 30 ml wide necked, screw-top bottles are taken and dog hair (from the same Alsatian in all experiments) is arranged around the sides in such a way that the natural stiffness of the hair holds it in position. A small pyrethroid-containing strip is then put into the bottle. After sealing, the bottle is rotated (on a "rock and roll" apparatus) so that the strip continually falls and brushes against the hair. After predetermined periods, the hair is removed and analysed for pyrethroid (using gas liquid chromatography with electron capture detection).

The results of the experiments are summarized in the following Table. All experiments have been conducted in duplicate.

Table A

| Experiment | Plasticizer formulation (% w) | Comment on strip | ppm(w) pyrethroid on hair after 4 days exposure |
|---|---|---|---|
| 1* | 30 DOA | clear, standard formulation | 327 |
| 2 | 15 DOA + 15 Cereclor S42 | clear, visible sweating | 667 |
| 3 | 25 DOA + 5 sesame oil | clear, greasy feel | 1500 |
| 4 | 25 DOA + 5 corn oil | clear, greasy feel | 1290 |
| 5 | 20 DOA + 10 sesame oil | opaque, excessive sweating | 9420 |

* = not according to the invention.

The pyrethroid emission evidently is increased in case non-compatible secondary plasticizers are used (experiments 2, 3, 4 and 5). The non-compatibility is evidenced by a greasy feel, or by visible sweating. Experiment 5 relates to a strip having a very high emission, but obviously containing too much sesame oil to be marketable.

Example 2

The pyrethroid emission was measured after smearing

the strips of Example 1 lightly with sesame oil. As is evident from Table B, the emission was even further increased. It was not necessary to oil the strip of experiment 5, since this strip was self-oiling.

Table B

ppm(w) pyrethroid on hair after 4 days exposure

| Experiment | corresponding experiment in Example 1 | untreated (Example 1) | oiled (Example 2) |
|---|---|---|---|
| 9 | 2 | 667 | 3535 |
| 10 | 3 | 1500 | 3398 |
| 11 | 4 | 1290 | 6406 |

Example 3

Strips having the composition of experiments 3,4 and 5 were sealed into transparent inert pouches and stored for 24 months at room temperature in the dark. Half of the strips were stressed by bending them into a semi-circle. Apart from a subjective "greasy feeling", which had also been observed on freshly prepared samples, no symptoms of tangible sweating were apparent after 24 months, neither with stressed nor with unstressed strips.

Example 4

Finally, strips were tested for their long-term emission behaviour. This amounted to repeating the in-vitro test of pyrethroid emission of Example 1 every four days. After having been in contact with a strip for four days, the dog hair was analysed, and the same strip was rotated with fresh hair for another period of four days. The results are given in Tables C, D and E relating to the compositions of experiments 3,4 and 5.

Table C

Plasticizer: 25 DOA + 5 sesame oil

| No. of days exposure | ppm(w) pyrethroid on hair | cumulative % w emitted |
|---|---|---|
| 4 | 1510 | 0.15 |
| 8 | 460 | 0.20 |
| 12 | 848 | 0.28 |
| 16 | 1351 | 0.42 |
| 20 | 1274 | 0.54 |
| 24 | 1559 | 0.70 |
| 28 | 1164 | 0.82 |
| 32 | 1350 | 0.95 |
| 36 | 1254 | 1.08 |
| 40 | 1698 | 1.25 |

Table D

Plasticizer: 25 DOA + 5 corn oil

| No. of days exposure | ppm(w) pyrethroid on hair | cumulative % w emitted |
|---|---|---|
| 4 | 1290 | 0.13 |
| 8 | 711 | 0.20 |
| 12 | 1077 | 0.31 |
| 16 | 1032 | 0.41 |
| 20 | 1725 | 0.58 |
| 24 | 1075 | 0.69 |
| 28 | 1091 | 0.80 |
| 32 | 1645 | 0.96 |
| 36 | 1355 | 1.10 |
| 40 | 1838 | 1.28 |

Table E

Plasticizer: 20 DOA + 10 sesame oil

| No. of days exposure | ppm(w) pyrethroid on hair | cumulative % w emitted |
|---|---|---|
| 4 | 9417 | 0.94 |
| 8 | 2765 | 1.22 |
| 12 | 3462 | 1.56 |
| 16 | 1421 | 1.71 |
| 20 | 3304 | 2.04 |
| 24 | 2663 | 2.30 |
| 28 | 3221 | 2.63 |
| 32 | 2211 | 2.85 |
| 36 | 2751 | 3.12 |
| 40 | 2239 | 3.35 |
| 44 | 2380 | 3.58 |
| 48 | 2487 | 3.83 |

A statistical analysis of these data learns that after about 5 days the emission of pyrethroid from the strips becomes linear with the time. From about that day, the compositions containing 5% w incompatible vegetable oil both have an average emission of about 0.035% w pyrethroid/day, whereas the composition containing 10% w oil emits about 0.066% w pyrethroid/day. It also follows that the composition containing 10% w sesame oil after 50 days will have emitted half (4% w) of the pyrethroid originally present, and that the compositions containing 5% w vegetable oil will have emitted a quart (2% w) of the pyrethroid originally present after 60 days.

Pesticidal control devices based on these compositions will be very effective therefore during extended periods of time.

Example 5

Compositions were prepared by blending at 160°C measured amounts of thermoplastic rubber and polypropylene granules with fenvalerate pyrethroid and anti-oxidants. After blending had been completed, the mixture was cooled and pressed into a sheet, from which strips were cut.

These strips were tested for their pyrethroid emission using Alsatian dog hair, as described in Example 1. The formulations and the results are summarized in Table F.

Table F

| Experiment | Formulation (%w) | | | | ppm(w) pyrethroid on hair after 8 days exposure |
|---|---|---|---|---|---|
| | TR 1102 | TR 4203 | KMT 61 | pyrethroid | |
| 12* | 45.7 | —— | 45.7 | 8.6 | 61 |
| 13 | —— | 45.7 | 45.7 | 8.6 | 210 |
| 14 | —— | 64.0 | 27.4 | 8.6 | 205 |

* not according to the invention

Notes: TR 1102 = a "Cariflex" thermoplastic rubber (elastomer), with 0.15% w Ionol C.P. and 0.15% w Irganox 1010 as antioxidants.

TR 4203 = a composition of 70% w TR 1102 plus 30% w naphthenic oil.

KMT 61 = a high-density polypropylene.

Evidently the compositions of experiments 13 and 14, which contain a naphthenic oil (incompatible in particular with the polypropylene), emit more pyrethroid, than the comparative composition of experiment 12.

## C L A I M S

1. Slow release pesticidal composition comprising an intimate admixture of (a) a solid polymeric macromolecular substance, (b) a contact-pesticide having arthropodicidal action, and (c) a component acting as a carrier for the contact-pesticide, which component is incompatible with the solid polymeric macromolecular substance.

2. A composition as claimed in claim 1, characterized in that in addition (d) a plasticizer, which is compatible with the solid polymeric macromolecular substance, is admixed.

3. A composition as claimed in claim 1 or 2, characterized in that the solid polymeric macromolecular substance is a polymer or a copolymer of vinyl chloride.

4. A composition as claimed in claims 1-3, characterized in that the contact-pesticide has insecticidal and/or acaricidal action.

5. A composition as claimed in claim 4, characterized in that the contact-pesticide is a pyrethroid.

6. A composition as claimed in claims 1-5, characterized in that the component acting as a carrier for the contact-pesticide, acts as a synergist with the pesticide.

7. A composition as claimed in claims 5 and 6, characterized in that the component acting as a carrier for and as a synergist with the pyrethroid is a vegetable oil containing 1,3-benzodioxole or a derivative thereof.

8. A composition as claimed in claim 7, characterized in that the vegetable oil containing 1,3-benzodioxole or a derivative thereof is sesame oil.

9. A composition as claimed in claims 1-8, characterized in that it comprises an intimate admixture of (a) 40-98% by weight of the solid polymeric macromolecular

substance, (b) 1-15% by weight of the contact-pesticide having arthropodicidal action, (c) 1-20% by weight of the component acting as a carrier for the contact-pesticide, which component is incompatible with the solid polymeric macromolecular substance, and (d) 0-40% by weight of the plasticizer, which is compatible with the solid polymeric macromolecular substance.

10. A composition as claimed in claim 9, characterized in that the sum of the weight percentages (c) and (d) does not exceed 40%.

11. Slow release pesticidal control device, characterized in that it is made entirely or partially of the composition of claims 1-10.

12. Method for the preparation of a slow release pesticidal control device, characterized in that the intimately admixed and heated composition of claims 1-10 is cast, extruded or injection moulded into a desired shape.

13. Method of controlling ectoparasites on or near an animal characterized in that a slow release pesticidal control device as claimed in claim 11 is attached to the animal.

14. A method as claimed in claim 13, characterized in that the slow release pesticidal control device has been smeared with a light oil.

15. A slow release pesticidal composition as claimed in claim 1, substantially as described hereinbefore with particular reference to the Examples.

16. A slow release pesticidal control device as claimed in claim 11, substantially as described hereinbefore.